Europäisches Patentamt

European Patent Office

Office européen des brevets

(11) Veröffentlichungsnummer: **0 446 774 A1**

## (12) EUROPÄISCHE PATENTANMELDUNG

(21) Anmeldenummer: 91103422.1

(51) Int. Cl.⁵: **F16F 15/16**

(22) Anmeldetag: 06.03.91

(30) Priorität: 10.03.90 DE 4007697

(43) Veröffentlichungstag der Anmeldung:
18.09.91 Patentblatt 91/38

(84) Benannte Vertragsstaaten:
DE ES FR GB IT

(71) Anmelder: **Fichtel & Sachs AG**
**Ernst-Sachs-Strasse 62**
**W-8720 Schweinfurt(DE)**

(72) Erfinder: **Brunken, Gerd, Dipl.-Ing.**
**Eibenstrasse 2**
**W-8721 Dittelbrunn(DE)**

(74) Vertreter: **Liska, H., Dr.-Ing. et al**
**Möhlstrasse 22**
**W-8000 München 80(DE)**

(54) **Torsionsschwingungsdämpfer.**

(57) Der insbesondere für den Antriebsstrang eines Kraftfahrzeugs bestimmte Torsionsschwingungsdämpfer umfaßt ein um eine Drehachse drehbares Scheibenteil (11) und ein das Scheibenteil (11) zumindest teilweise umschließendes, relativ zu dem Scheibenteil (11) gleichachsig drehbares Gehäuseteil (17), welches zusammen mit dem Scheibenteil (11) wenigstens eine nach außen abgedichtete Dämpferkammer zur Aufnahme eines viskosen Dämpferfluids begrenzt. Ein am Scheibenteil (11) oder am Gehäuseteil (17) angeordneter Verdrängerköper (31) in jeder Dämpferkammer unterteilt die Dämpferkammer in zwei Verdrängerräume, die durch einen Drosselkanal (41) miteinander verbunden sind. Das Scheibenteil (11) und das Gehäuseteil (17) sind über mehrere Federn (23) drehelastisch miteinander gekuppelt. Auf der zur Drehachse (1) hin gelegenen Seite der Dämpferkammer schließen sich zu deren Verdrängerräumen hin offene Scherspalte (47, 49) an, in die hinein zumindest ein Teil des Dämpferfluids der Dämpferkammer bei der Relativdrehung von Scheibenteil (11) und Gehäuseteil (17) ausweichen kann. Die Füllmenge an Dämpferfluid ist so bemessen, daß es bei fehlenden Drehschwingungen im wesentlichen vollständig in die Dämpferkammer zentrifugiert wird und mit wachsender Schwingungsamplitude aus der Dämpferkammer zur Erzeugung eines Reibmoments in die Scherspalte (47, 49) verdrängt wird.

Fig. 1

Rank Xerox (UK) Business Services

Die Erfindung betrifft einen Torsionsschwingungsdämpfer, insbesondere für den Antriebsstrang eines Kraftfahrzeugs.

Aus der DE-A-28 48 748 ist ein Torsionsschwingungsdämpfer für den Antriebsstrang eines Kraftfahrzeugs bekannt, bei welchem ein um eine Drechachse drehbares Scheibenteil axial zwischen Seitenwänden eines gleichachsig zum Scheibenteil drehbaren Gehäuseteils angeordnet ist. Das Scheibenteil ist über mehrere Schraubenfedern drehelastisch mit dem Gehäuseteil gekuppelt. Am Außenumfang des Scheibenteils sind mehrere Aussparungen vorgesehen, in die vom Innenumfang des Gehäuseteils radial nach innen abstehende Verdrängerkörper eingreifen. Die Aussparungen bilden vom Scheibenteil und dem Gehäuseteil begrenzte, mit Dämpferfluid gefüllte, nach außen abgedichtete Dämpferkammern, die von den Verdrängerkörpern jeweils in zwei Verdrängerräume unterteilt werden. Zwischen dem Boden jeder der Aussparungen und dem in die Aussparung hineinreichenden Verdrängerkörper ist ein Umfangsspalt vorgesehen. Der Umfangsspalt bildet einen Drosselkanal, über den bei einer Relativdrehung von Scheibenteil und Gehäuseteil das Dämpferfluid von einem Verdrängerraum in den anderen übertreten kann. Der Querschnitt des Drosselkanals ist so bemessen, daß sich eine Dämpfungswirkung bei Torsionsschwingungen ergibt. Die Abstimmung der Dämpfungswirkung auf eine Vielzahl Betriebsfälle, insbesondere bei Verwendung des Torsionsschwingungsdämpfers im Antriebsstrang eines Kraftfahrzeugs hat sich als problematisch herausgestellt und genügt nicht den Anforderungen einer Reihe von Betriebsfällen.

Es ist Aufgabe der Erfindung einen Torsionsschwingungsdämpfer zu schaffen, dessen Dämpfungswirkung mit vergleichsweise geringem Konstruktionsteileaufwand besser als bisher der zur dämpfenden Schwingungsamplitude und Schwingungsfrequenz angepaßt werden kann.

Der insbesondere für den Antriebsstrang eines Kraftfahrzeugs geeignete Torsionsschwingungsdämpfer gemäß der Erfindung umfaßt ein um eine Drehachse drehbares Scheibenteil sowie ein das Scheibenteil zumindest teilweise umschließendes, relativ zu dem Scheibenteil gleichachsig drehbares Gehäuseteil, welches zusammen mit dem Scheibenteil wenigstens eine nach außen abgedichtete Dämpferkammer zur Aufnahme von Dämpferfluid begrenzt. Ein am Scheibenteil oder am Gehäuseteil angeordneter Verdrängungskörper in jeder Dämpferkammer unterteilt die Dämpferkammer in zwei Verdrängerräume, die durch einen Verbindungsweg, insbesondere einen Drosselkanal miteinander verbunden sind. Wenigstens ein, vorzugsweise mehrere Federelemente, z.B. Schraubenfedern kuppeln das Scheibenteil drehelastisch mit dem Gehäuseteil.

Die erfindungsgemäße Verbesserung des Drehschwingungsdämpfers besteht darin, daß das Scheibenteil und das Gehäuseteil auf der zur Drehachse hin gelegenen Seite der Dämpferkammer wenigstens einen zu den Verdrängerräumen offenen Scherspalt begrenzen, in den hinein zumindest ein Teil des Dämpferfluids der Dämpferkammer bei der Relativdrehung von Scheibenteil und Gehäuseteil ausweichen kann. Der Scherspalt kann zugleich den genannten Verbindungsweg bilden.

Im Betrieb des Torsionsschwingungsdämpfers sammelt sich das Dämpferfluid aufgrund der Zentrifugalkraft in der Dämpferkammer. Die Füllmenge an Dämpferfluid ist so bemessen, daß der Scherspalt bei fehlenden Torsionsschwingungen frei von Dämpferfluid oder allenfalls nur teilweise mit Dämpferfluid gefüllt ist. Bei Drehschwingungen verdrängt der Verdrängerkörper das Verdrängerfluid über den Verbindungsweg bzw. den Drosselkanal von einem Verdrängerraum der Dämpferkammer in den anderen. Abhängig von der Amplitude und der Frequenz der Drehschwingung wird hierbei zusätzlich gegen die Fliehkraft das Verdrängerfluid auch in den Scherspalt hinein verdrängt. In dem Scherspalt erhöht die Flüssigkeitsreibung die Dämpfungswirkung.

In einer bevorzugten Ausgestaltung der Erfindung ist die Füllmenge an Dämpferfluid so bemessen, daß die Verdrängerräume in einer durch das Federelement festgelegten Ruhe-Relativstellung von Gehäuseteil und Scheibenteil lediglich teilweise mit Dämpferfluid gefüllt sind. Hierdurch wird erreicht, daß bei geringen Schwingungsamplituden, wie sie insbesondere im Leerlaufbetrieb der Brennkraftmaschine des Kraftfahrzeugs auftreten, der Scherspalt vollständig entleert und die Flüssigkeitsreibwirkung vollständig abgeschaltet ist. Das Scheibenteil und das Gehäuseteil müssen über einen begrenzten Relativdrehwinkel gegeneinander verdreht werden, bevor die Verdrängerwirkung des Verdrängerkörpers Fluid in den Scherspalt treibt und die Flüssigkeitsreibwirkung einsetzt.

Ein ähnlicher Effekt, durch den die Dämpfungswirkung bei geringen Schwingungsamplituden verringert wird, läßt sich erzielen, wenn der Drosselkanal als durch Flächen des Scheibenteils und des Gehäuseteils begrenzter Umfangsspalt ausgebildet ist und eine dieser Spaltflächen so geformt ist, daß sie bei der Relativdrehung von Scheibenteil und Gehäuseteil den Spaltquerschnitt, ausgehend von einer durch das Federelement festgelegten Ruhe-Relativstellung, in beiden Richtungen verengt. Damit läßt sich bei im wesentlichen vollständig mit Verdrängerfluid gefüllten Verdrängerräumen eine drehwinkelabhänigige Dämpfung erzielen.

In einer bevorzugten Ausführungsform reicht das Gehäuseteil mit seinem Innenumfang über den Außenumfang des Scheibenteils hinweg. In Umfangsrichtung sind mehrere Dämpferkammern verteilt zwischen Außenumfang des Scheibenteils und Innenumfang des Gehäuseteils vorgesehen, wobei die Dämpferkammern durch in Umfangsrichtung abwechselnd vom Scheibenteil radial nach außen abstehende und vom Gehäuseteil nach radial innen abstehende Verdrängerkörper in aufeinanderfolgende Verdrängerräume unterteilt sind. Insbesondere wenn die Breite der Verdrängerkörper in Umfangsrichtung kleiner ist als die Breite der Verdrängerräume (in der Ruhe-Relativstellung) lassen sich vergleichsweise großvolumige Verdrängerkammern für große Relativdrehwinkel erzielen. Die Drosselkanäle werden zweckmäßigerweise durch Umfangsspalte radial zwischen dem Innenumfang des Gehäuseteils und den Verdrängungskörpern des Scheibenteils und/oder durch Umfangsspalte radial zwischen dem Außenumfang des Scheibenteils und den Verdrängungskörpern des Gehäuseteils gebildet. Während der Außenumfang des Scheibenteils zwischen seinen Verdrängerkörpern im wesentlichen als Zylinderfläche ausgebildet ist, lassen sich die den Verdrängerkörpern des Gehäuseteils zur Begrenzung des Drosselkanals gegenüberliegenden Spaltflächen als einfache Abflachungen ausbilden, um so eine vom Relativdrehwinkel abhängige Progression der Dämpferwirkung zu erzielen.

In einer bevorzugten Ausgestaltung der Erfindung sind zur Erhöhung der Dämpfungswirkung axial beiderseits des Scheibenteils Scherspalte zwischen dem Scheibenteil und benachbarten Seitenwänden des Gehäuseteils vorgesehen. Eine weitere Erhöhung der Flüssigkeitsreibwirkung und damit der Dämpfungswirkung wird erreicht, wenn das Scheibenteil und die Seitenwände des Gehäuseteils im Bereich der Scherspalte mit zueinander und zur Drehachse konzentrischen, ringförmigen Rippen und Rillen versehen sind, die in radialer Richtung abwechseln derart, daß die Rippen des Scheibenteils und der Seitenwände in Rillen des jeweils anderen Teils eingreifen. Die Rippen und Rillen vergrößern die für die Flüssigkeitsreibung zur Verfügung stehenden Scherspaltflächen.

Die Dämpferkammer ist zweckmäßigerweise im Bereich des Außenumfangs des Scheibenteils angeordnet, so daß das Federelement in einem Fenster des Scheibenteils radial zwischen der Drehachse und dem Außenumfang angeordnet werden kann, während der Scherspalt radial zwischen dem Außenumfang und dem Fenster des Scheibenteils verläuft. Das Gehäuseteil hat zweckmäßigerweise beiderseits des Scheibenteils Seitenwände, die sich radial über das Federelement hinweg erstrecken und zur Kupplung mit dem Federelement mit Steuerkanten versehen sind. Die das Scheibenteil dicht umschließenden Seitenwände sind bevorzugt radial zwischen der Drehachse und dem Fenster gegenüber dem Scheibenteil abgedichtet. Insbesondere bei einem mit Rillen und Rippen der vorstehend erwähnten Art versehenen Scherspalt läßt sich der Torsionsschwingungsdämpfer kompakt aufbauen.

Separate Verdrehwinkelanschläge können entfallen, wenn wenigstens einer der Verdrängerkörper zugleich einen Begrenzungsanschlag bildet.

Der Torsionsschwingungsdämpfer ist bevorzugt Bestandteil einer Kupplungsscheibe einer Reibungskupplung, wobei das Scheibenteil mit einer Nabe und das Gehäuseteil mit Kupplungsreibbelägen versehen ist. Das Gehäuseteil kann hierbei in vorteilhafterweise aus zwei im wesentlichen identischen Gehäusehälften gebildet sein, die im Bereich ihres Außenumfangs durch Nieten miteinander verbunden sind, welche zugleich Federsegmente der Kupplungsreibbeläge am Gehäuseteil halten. Vorteil einer solchen Ausgestaltung ist ihre einfache Konstruktion.

Im folgenden wird die Erfindung anhand einer Zeichnung näher erläutert. Hierbei zeigt:

Figur 1    einen Axiallängsschnitt durch eine Hälfte einer Kupplungsscheibe einer Kraftfahrzeug-Reibungskupplung, gesehen entlang einer Linie I - I in Figur 2;

Figur 2    einen teilweisen Axialquerschnitt durch die Kupplungsscheibe, gesehen entlang einer Linie II - II in Figur 1 und

Figur 3    einen Teilquerschnitt durch eine Variante einer Kupplungsscheibe.

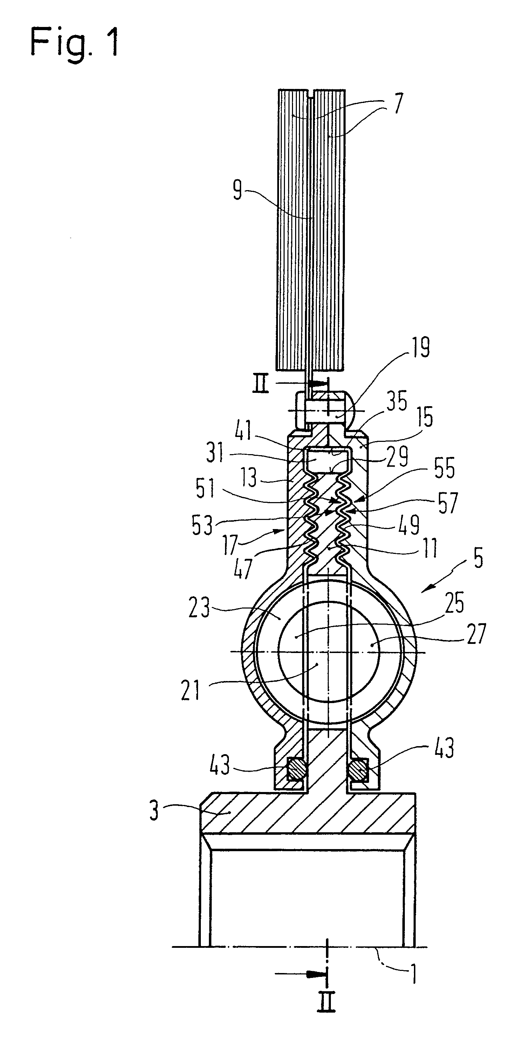

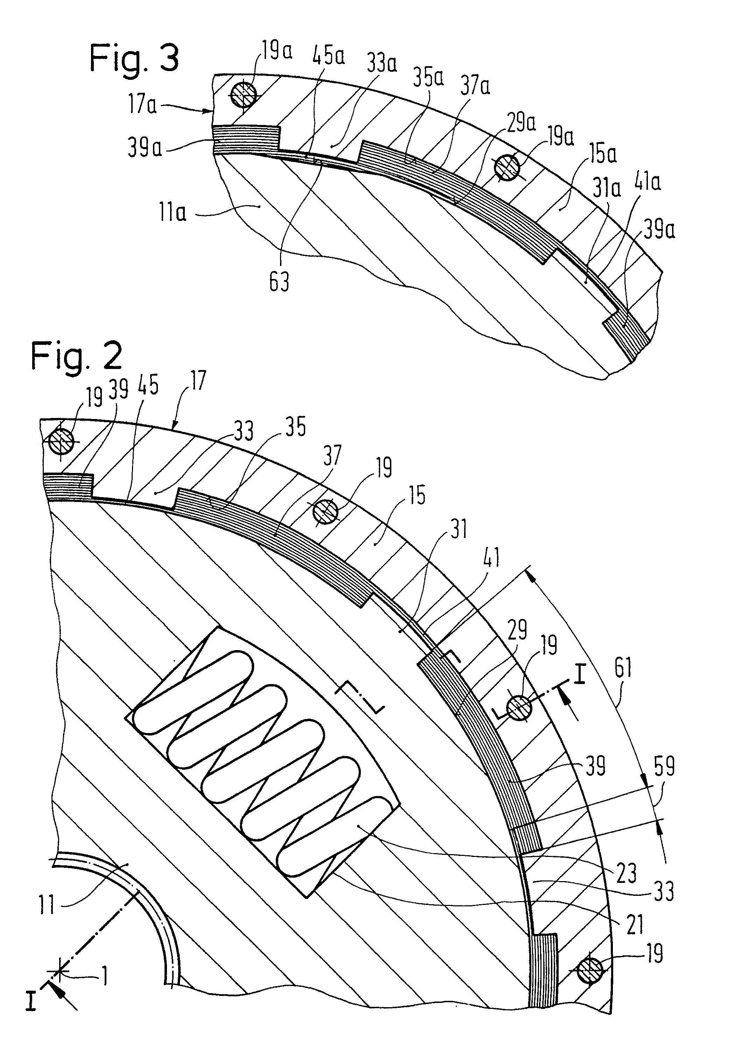

Die in den Figuren 1 und 2 dargestellte, um eine Drehachse 1 rotierende Kupplungsscheibe umfaßt eine in herkömmlicher Weise drehfest, aber axial verschiebbar, auf eine nicht dargestellte Getriebewelle aufsetzbare Nabe 3, an der über einen Torsionsschwingungsdämpfer 5 Kupplungsreibbeläge 7 über Belagfedersegmente 9 gehalten sind. Der Torsionsschwingungsdämpfer 5 umfaßt ein Scheibenteil in Form einer im wesentlichen kreisscheibenförmigen, von der Nabe 3 nach radial außen sich erstreckenden Nabenscheibe 11 und ein aus zwei im wesentlichen identischen Seitenscheiben 13, 15 zusammengesetztes Gehäuseteil 17, welches über einen begrenzten Drehwinkel gleichachsig zur Nabe 3 und der Nabenscheibe 11 drehbar an diesen Komponenten geführt ist. Mit am Außenumfang der Seitenscheiben 13, 15 vorgesehenen Nieten 19, die die beiden Seitenscheiben 13, 15 fest miteinander verbinden, sind zugleich die Federungssegmente 9 der Reibbeläge 7 an dem Gehäuseteil 17 befestigt. In Fenstern 21 der Nabenscheibe 11 sitzen in Umfangsrichtung verteilt mehrere Schraubenfedern 23, die über Steuerkanten 25 der Seitenscheiben 13, 15 die Nabenscheibe 11 drehelastisch mit dem Gehäuseteil 17 und damit mit den Reibbelägen 7 kuppeln.

Zur Dämpfung von Drehschwingungen zwischen dem Gehäuseteil 17 und der Nabenscheibe 11 sind entlang des im wesentlichen kreiszylindrischen Außenumfangs 29 der Nabenscheibe 11 mehrere von dem Außenumfang 29 radial nach außen abstehende Verdrängerkörper 31 vorgesehen, die in Umfangsrichtung zwischen Verdrängungskörper 33 greifen, welche vom ebenfalls im wesentlichen kreiszylindrischen, mit radialem Abstand vom Außenumfang 29 verlaufenden Innenumfang 35 des Gehäuseteils 17 nach radial innen ragen. In Umfangsrichtung benachbarte Verdrängerkörper 33 des Gehäuseteils 17 begrenzen zusammen mit dem Innenumfang 35 des Gehäuseteils 17 sowie dem Außenumfang 29 der Nabenscheibe 4 jeweils Dämpferkammern, die durch die dazwischen liegenden Verdrängerkörper 31 der Nabenscheibe 11 in zwei Verdrängerräume 37, 39 unterteilt werden. Die Verdrängerräume 37, 39 enthalten ein Verdrängerfluid, das über Drosselkanäle in Form je eines Umfangsspalts 41 von einem Verdrängerraum in den anderen Verdrängerraum übertreten kann. Die Seitenwände 13, 15 des Gehäuseteils 17 sind hierzu geschlossen und erstrekken sich über die Schraubenfedern 23 hinweg nach radial innen in den Bereich zwischen Nabe 3 und Schraubenfedern 23, wo sie durch Dichtringe 43 (Figur 1) gegenüber der Nabenscheibe 11 abgedichtet sind. Analog zu den Dämpferräumen 37, 39 bilden auch in Umfangsrichtung benachbarte Verdrängerkörper 31 der Nabenscheibe 11 zwischen sich Dämpferkammern, die durch die Verdrängerkörper 33 in je zwei Verdrängerräume unterteilt werden. Zwischen dem Außenumfang 29, der Nabenscheibe 4 und den Verdrängerkörpern 33 sind gleichfalls Drosselkanäle 45 in Form eines Umfangsspalts vorgesehen.

An die Verdrängerräume schließen sich nach radial innen beiderseits der Nabenscheibe 11 Scherspalte 47, 49 an, die zu den Verdrängerräumen 37, 39 hin offen sind und sich im wesentlichen bis an den Bereich der Schraubenfedern 23 heran erstrecken. Die Scherspalte 47, 49 sind durch die Seitenflächen der Nabenscheibe 11 einerseits und die axial benachbarten Seitenflächen der beiden Seitenscheiben 13, 15 andererseits begrenzt. Konzentrisch angeordnete, radial einander abwechselnde Rippen 51 und Rillen 53 auf den Seitenflächen der Nabenscheibe 11 greifen in komplementäre Rillen 55 und Rippen 57 der axial benachbarten Seitenscheibe 13 bzw. 15, um so die Scherspaltfläche zu vergrößern. Die Scherspalte 47, 49 erzeugen, wenn sie mit viskosem Verdrängerfluid gefüllt sind, ein Flüssigkeitsreibmoment, das Drehschwingungen zwischen der Nabenscheibe 11 und dem Gehäuseteil 17 dämpft.

Die Schraubenfedern 23 halten die Nabenscheibe 11 relativ zum Gehäuseteil 17 bei nicht durch Drehmomente belastenden Torsionsschwingungsdämpfer in einer Ruhestellung, in der die beiden Verdrängerräume 37, 39 jeder Dämpferkammer im wesentlichen gleich groß sind. Die Füllmenge des Dämpferfluids, bei welchem es sich um eine viskose Flüssigkeit handelt, ist so bemessen, daß sie kleiner ist als das Volumen sämtlicher Dämpferkammern. Bei der im Betrieb rotierenden Kupplungsscheibe wird das Dämpferfluid nach radial außen in die Verdrängerräume 37, 39 zentrifugiert. Solange keine Drehschwingungen der Rotationsbewegung überlagert sind, nehmen die Verdrängerräume 37, 39 das Dämpferfluid vollständig auf und die entleerten Scherspalte 47, 49 erzeugen kein Flüssigkeitsreibmoment. Werden der Drehbewegung Drehschwingungen überlagert, so ändert sich das Volumenverhältnis der Verdrängerräume 37, 39. Bei langsamen Drehschwingungen kann sich das in den Verdrängerräumen 37, 39 enthaltene Dämpferfluid über die Umfangsspalte 41, 45 ausgleichen. Mit wachsender Drehschwingungsfrequenz ändert sich das Volumen der Dämpferräume 37 rascher als das Dämpferfluid durch die Umfangsspalte 41, 45 ausgeglichen werden kann. Das Dämpferfluid weicht mit wachsender Schwingungsfrequenz und wachsender Schwingungsamplitude zunehmend in die radial daran anschließenden Scherspalte 47, 49 aus und erzeugt ein die Drehschwingung dämpfendes Flüssigkeitsreibmoment. Da die Füllmenge an Dämpferfluid kleiner als das Gesamtvolumen der Dämpferkammern bemessen ist, kann sich die Nabenscheibe 11 um einen Relativdrehwinkel 59 (Figur 2) verdrehen, bevor die in ihrem Volumen sich vermindernden Verdrängerräume vollständig mit Dämpferfluid gefüllt sind und das Dämpferfluid beginnt in die Scherspalte 47, 49 hinein auszutreten. Der durch die Füllmengendifferenz bestimmte Drehwinkel 59 bestimmt den Arbeitsbereich im Leerlaufbetrieb der Brennkraftmaschine, in welchem die Ungleichförmigkeit der Drehbewegung der Brennkraftmaschine nicht ausreicht, um das Dämpferfluid in die Scherspalte 47, 49 hinein zu verdrängen. Im Leerlaufbetrieb wird damit die Flüssigkeitsreibung auf ein Minimum reduziert. Im Lastbetrieb reicht das höhere, zu übertragende Drehmoment aus, um die Drehschwingungen in einen Winkelbereich 61 zu verlagern, in welchem der jeweils im Volumen sich verkleinernde Verdrängungsraum Dämpferfluid in die Scherspalte 47, 49 hinein verdrängt. Das damit ansteigende Flüssigkeitsreibmoment erlaubt es, Drehschwingungen höherer Amplitude zu dämpfen, wie sie beispielsweise durch die anwachsende Ungleichförmigkeit oder bei einem plötzlichen Lastwechsel durch Gasgeben oder Gaswegnehmen erzeugt werden. Eine entsprechende Dämpfungssituation ergibt sich beim Durchlaufen von Eigenfrequenzen, die ebenfalls die Schwingungsamplituden ansteigen lassen. Auch hierbei wird selbsttätig das Flüssigkeitsreibmoment erhöht. Wird beispielsweise das von der Kupplung übertragene Drehmoment durch einen Lastwechsel erhöht, so sammelt sich das viskose Drehmoment aufgrund der Fliehkraft allmählich wieder in den Verdrängungsräumen 37, 39 und die bei nachfolgender, gleichbleibender Fahrt des Kraftfahrzeugs auftretenden geringen Schwingungsamplituden werden wieder mit nur geringer Flüssigkeitsreibung gedämpft.

Da die beiden Seitenscheiben 13, 15 des Gehäuseteils 17 im wesentlichen identisch ausgebildet sind, kann die Kupplungsscheibe sehr kostengünstig hergestellt werden. Die Anpassung des Reibmoments kann in weiten Bereichen durch die Verwendung viskoser Flüssigkeiten mit unterschiedlicher Viskosität optimiert werden.

Es versteht sich, daß entweder die Verdrängerkörper 33 oder die Verdrängerkörper 31 gegebenenfalls auch dichtend an der jeweils radial benachbarten Umfangsfläche anliegen können. Es können aber auch beide Arten von Verdrängerkörpern 31 bzw. 33 dichtend an der jeweils gegenüberliegenden Umfangswand 35 bzw. 29 anliegen. In diesem Fall bilden die radial außen liegenden Bereiche der Scherspalte 47, 49 Verbindungswege mit Drosselkanalwirkung.

Figur 3 zeigt eine Variante der Kupplungsscheibe, die die Anpassung der Dämpfungseigenschaften im Bereich kleinerer Schwingungsamplituden erlaubt. Die Kupplungsscheibe der Figur 3 unterscheidet sich von der Kupplungsscheibe der Figuren 1 und 2 im wesentlichen nur durch die Gestaltung der Drosselkanäle. Gleichwirkende Teile sind mit Bezugszahlen der Figuren 1 und 2 und zur Unterscheidung mit den Buchstaben a versehen. Zur Erläuterung dieser und der im übrigen nicht weiter dargestellten Komponenten der Kupplungsscheibe wird auf die Beschreibung der Figuren 1 und 2 Bezug genommen.

Der im Bereich der Ruhe-Relativdrehstellung von Nabenscheibe 11a und Gehäuseteil 17a den Verdrängerkörpern 33a des Gehäuseteils 17a radial gegenüberliegende Bereich der ansonsten kreiszylindrischen äußeren Umfangsfläche 29a der Nabenscheibe 11a ist über mehr als die Umfangsbreite der Dämpferkörper 33a abgeflacht. Die so gebildete tangential zur Umfangsfläche 29a verlaufende Spaltfläche 63 der Umfangsspalte 45a führt zu einem Drosselquerschnitt der Umfangsspalte 45a, der sich, ausgehend von der Ruhestellung bei einer Relativdrehung von Nabenscheibe 11 und Gehäuseteil 17a fortschreitend verengt. Die Umfangslänge der abgeflachten Spaltefläche 63 legt einen Relativdrehwinkel fest, in welchem der Drosselquerschnitt vergrößert und damit die Dämpfungswirkung verringert ist. Bei der Kupplungsscheibe der Figur 3 kann die Füllmenge an Dämpferfluid im wesentlichen gleich dem Gesamtvolumen der Dämpferkammern gewählt sein, da der vergrößerte Drosselquerschnitt bei kleinen Schwingungsamplituden bzw. kleiner Relativauslenkung im Bereich geringer zu übertragender Drehmomente die Flüssigkeitsreibung auf einem Minimum hält.

Die Nabenscheibe der vorstehend erläuterten Kupplungsscheiben hat Plattenform. Es versteht sich, daß die Seitenflächen auch konusförmig ausgebildet sein kann. Bei den dargestellten Ausführungsbeispielen wird der Relativdrehwinkel zwischen Nabenscheibe und Gehäuseteil durch die Verdrängerkörper begrenzt. Statt dessen können selbstverständlich auch andere Drehbegrenzungsanschläge vorgesehen sein.

**Patentansprüche**

1. Torsionsschwingungsdämpfer, insbesondere für den Antriebsstrang eines Kraftfahrzeugs, umfassend
   - ein um eine Drehachse (1) drehbares Scheibenteil (11),
   - ein das Scheibenteil (11) zumindest teilweise umschließendes, relativ zu dem Scheibenteil (11) gleichachsig drehbares Gehäuseteil (17), welches zusammen mit dem Scheibenteil (17) wenigstens eine nach außen abgedichtete Dämpferkammer zur Aufnahme von Dämpferfluid begrenzt,
   - einen am Scheibenteil (11) oder am Gehäuseteil (17) angeordneten Verdrängerkörper (31, 33) in jeder Dämpferkammer, der die Dämpferkammer in zwei Verdrängerräume (37, 39) unterteilt,
   - einen die beiden Verdrängerräume (37, 39) verbindenden Verbindungsweg (41, 45) für jede Dämpferkammer und
   - wenigstens ein das Scheibenteil (11) und das Gehäuseteil (17) drehelastisch miteinander kuppelndes Federelement (23),
   **dadurch gekennzeichnet,**
   daß das Scheibenteil (11) und das Gehäuseteil (17) auf der zur Drehachse (1) hin gelegenen Seite zumindest der einen Dämpferkammer wenigstens einen zu den Verdrängerräumen (37, 39) offenen Scherspalt (47, 49) begrenzen, in den hinein zumindest ein Teil des Dämpferfluids der Dämpferkammer bei der Relativbewegung von Scheibenteil (11) und Gehäuseteil (17) ausweichen kann.

2. Torsionsschwingungsdämpfer nach Anspruch 1,

**dadurch gekennzeichnet,**
daß die Füllmenge an Dämpferfluid so bemessen ist, daß die Verdrängerräume (37, 39) in einer durch das Federelement festgelegten Ruhe-Relativstellung von Gehäuseteil (17) und Scheibenteil (11) lediglich teilweise mit Dämpferfluid gefüllt sind.

3. Torsionsschwingungsdämpfer nach Anspruch 1 oder 2,
**dadurch gekennzeichnet,**
daß der Verbindungsweg einen durch Flächen (35a, 63) des Scheibenteils (11a) und des Gehäuseteils (17a) begrenzten, einen Drosselkanal bildenden Umfangsspalt (45a) umfaßt und eine von dessen Spaltflächen (63) so geformt ist, daß sie bei der Relativdrehung von Scheibenteil (11a) und Gehäuseteil (17a) den Spaltquerschnitt ausgehend von einer durch das Federelement (23) festgelegten Ruhe-Relativstellung in beiden Richtungen verengt.

4. Torsionsschwingungsdämpfer nach Anspruch 1 bis 3,
**dadurch gekennzeichnet,**
daß das Gehäuseteil (17) mit seinem Innenumfang (35) über den Außenumfang (29) des Scheibenteils (11) hinwegreicht und mehrere in Umfangsrichtung verteilte Dämpferkammern zwischen Außenumfang (29) des Scheibenteils (11) und Innenumfang (35) des Gehäuseteils (17) vorgesehen sind und daß die Dämpferkammern durch in Umfangsrichtung vorzugsweise abwechselnd vom Scheibenteil (11) radial nach außen abstehende Verdrängerkörper (31) und vom Gehäuseteil (17) nach radial innen abstehende Verdrängerkörper (33) in aufeinanderfolgende Verdrängerräume (37, 39) unterteilt sind.

5. Torsionsschwingungsdämpfer nach Anspruch 4,
**dadurch gekennzeichnet,**
daß die Verbindungswege (41, 45) durch Umfangsspalte radial zwischen dem Innenumfang (35) des Gehäuseteils (17) und den Verdrängerkörpern (31) des Scheibenteils (11) und/oder durch Umfangsspalte (11) zwischen dem Außenumfang (29) des Scheibenteils (11) und den Verdrängerkörpern (33) des Gehäuseteils (17) gebildete Drosselkanäle umfassen.

6. Torsionsschwingungsdämpfer nach Anspruch 5,
**dadurch gekennzeichnet,**
daß das Scheibenteil (11) zwischen seinen Verdrängerkörpern (31) eine den Umfangsspalt (45) zum Verdrängerkörper (33) des Gehäuseteils (17) begrenzende flache, tangential verlaufende Spaltfläche (63) aufweist, an die sich in Umfangsrichtung beiderseits Zylinderflächen (29) anschließen.

7. Torsionsschwingungsdämpfer nach einem der Ansprüche 1 bis 6,
**dadurch gekennzeichnet,**
daß das Gehäuseteil (17) Seitenwände (13, 15) hat, die axial beiderseits des Scheibenteils (11) zusammen mit dem Scheibenteil (11) im wesentlichen radial verlaufende Scherspalte (47, 49) begrenzen.

8. Torsionsschwingungsdämpfer nach Anspruch 7,
**dadurch gekennzeichnet,**
daß das Scheibenteil (11) und die Seitenwände (13, 15) des Gehäuseteils (17) im Bereich der Scherspalte (47, 49) mit zueinander und zur Drehachse (1) konzentrischen, ringförmigen Rippen (51, 57) mit Rillen (53, 55) versehen sind, die in radialer Richtung abwechseln, derart, daß die Rippen (51, 57) des Scheibenteils (11) und der Seitenwände (13, 15) in Rillen (53, 55) des jeweils anderen Teils eingreifen.

9. Torsionsschwingungsdämpfer nach einem der Ansprüche 1 bis 8,
**dadurch gekennzeichnet,**
daß die Dämpferkammer im Bereich des Außenumfangs (29) des Scheibenteils (11) und das Federelement (23) in einem Fenster (21) des Scheibenteils (11) radial zwischen der Drehachse (1) und dem Außenumfang (29) angeordnet sind, daß der Scherspalt (47, 49) radial zwischen Außenumfang (29) und dem Fenster (21) des Scheibenteils (11) angeordnet ist und daß das Gehäuseteil (17) beiderseits des Scheibenteils (11) Seitenwände (13, 15) hat, die sich radial über das Federelement (23) hinweg erstrecken und zur Kupplung mit dem Federelement (23) mit Steuerkanten (25, 27) versehen sind.

10. Torsionsschwingungsdämpfer nach Anspruch 9,
**dadurch gekennzeichnet,**
daß die Seitenwände (13, 15) das Scheibenteil (11) dicht umschließen und radial zwischen der Drehachse (1) und dem Fenster (21) gegenüber dem Scheibenteil (11) abgedichtet sind.

11. Torsionsschwingungsdämpfer nach einem der Ansprüche 1 bis 10,
**dadurch gekennzeichnet,**
daß wenigstens ein Verdrängerkörper (31, 33) zugleich einen Begrenzungsanschlag für die Begrenzung des Relativdrehwinkels zwischen Scheibenteil (11) und Gehäuseteil (17) bildet.

12. Torsionsschwingungsdämpfer nach einem der Ansprüche 1 bis 11,
**dadurch gekennzeichnet,**
daß er Bestandteil einer Kupplungsscheibe einer Reibungskupplung ist, wobei das Scheibenteil (11) mit einer Nabe (3) und das Gehäuseteil (17) mit Kupplungsreibbelägen (7) versehen ist.

13. Torsionsschwingungsdämpfer nach Anspruch 12,
**dadurch gekennzeichnet,**
daß das Gehäuseteil (17) zwei im wesentlichen identische Gehäusehälften (13, 15) umfaßt, die im Bereich ihres Außenumfangs durch Nieten (19) miteinander verbunden sind, welche zugleich Federsegmente (23) der Kupplungsreibbeläge (9) am Gehäuseteil (17) halten.

# Fig. 1

Fig. 3

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3 624 498 (FICHTEL) <br> * Zusammenfassung; Abbildung I * <br> — — — | 1-5,7, 9-13 | F 16 F 15/16 |
| A | DE-C-5 030 89 (H.JUNKERS) <br> * Seite 2, Zeile 46 - Zeile 61; Abbildungen 1,2 * <br> — — — | 1 | |
| A | FR-A-2 626 337 (VALEO) <br> * Seite 9, Zeile 35 - Seite 10, Zeile 18; Abbildung 7 * <br> — — — — — | 1,3,4,6 | |

|  | RECHERCHIERTE SACHGEBIETE (Int. Cl.5) |
|---|---|
|  | F 16 F <br> F 16 D |

**Der vorliegende Recherchenbericht wurde für alle Patentansprüche erstellt**

| Recherchenort | Abschlußdatum der Recherche | Prüfer |
|---|---|---|
| Den Haag | 20 Juni 91 | ZANGHI A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument